# EUROPEAN PATENT SPECIFICATION

(11) **EP 1 970 248 B1**
(45) Date of publication and mention of the grant of the patent: **24.06.2009**
(21) Application number: 07425150.5
(22) Date of filing: 16.03.2007
(51) Int. Cl.: B60N 3/00, B60N 2/02

(54) **Motor-vehicle seat with means for disabling longitudinal adjustment thereof**
Kraftfahrzeugsitz mit Mitteln zum Sperren der Verstellung in Längsrichtung
Siège de véhicule motorisé doté d'un moyen pour désactiver son réglage longitudinal

(43) Date of publication of application: 17.09.2008
(73) Proprietor: C.R.F. Società Consortile per Azioni, 10043 - Orbassano (Torino) (IT)
(72) Inventor: Storgato, Angelo c/o C.R.F. Società Consortile per Azioni, 10043 Orbassano (Torino) (IT); Masoero, Giorgio c/o C.R.F. Società Consortile per Azioni, 10043 Orbassano (Torino) (IT); Rustini, Ferruccio c/o C.R.F. Società Consortile per Azioni, 10043 Orbassano (Torino) (IT); Pisino, Enrico c/o C.R.F. Società Consortile per Azioni, 10043 Orbassano (Torino) (IT)
(74) Representative: Notaro, Giancarlo

(56) References cited:
- EP-A2- 1 500 551
- DE-A1- 19 630 223
- DE-C1- 10 136 244
- FR-A- 2 804 386

## Description

The present invention relates to motor-vehicle seats and regards in particular a seat of the type comprising:
- a base structure (2), provided with means (5, 6, 11, 13) for adjustment of the longitudinal position of the seat on the floor panel of the motor vehicle;
- a cushion carried by the base structure; and
- a backrest, supported in an articulated way by the base structure (2) and displaceable between an upright position of normal use and a position where it is rotated forwards on top of the cushion and in which the rear surface of the backrest (3) defines a resting surface usable as a table.

In the case of a seat of the type referred to above used as front seat, it may be desirable, when the seat is prearranged in the configuration where it forms a table, to bring the seat itself into a position of maximum advance in order to leave a larger space available for the occupants of the rear seats. However, there exists in general a limit, dictated by requirements of safety and of comfort for the driver, to the possibility of advance of the seat when it has the backrest in the upright position of normal use.

In order to solve said problem, the subject of the invention is a motor-vehicle seat having all the characteristics referred to at the start of the present description and characterized moreover in that said seat further comprises:
- means for disabling the aforesaid means of longitudinal adjustment, displaceable between an activated condition and a deactivated condition; and
- means for activating said disabling means when the backrest is not in its position where it is knocked down for use as a table.

In a first embodiment, said means for activating the disabling means when the backrest is not in its position where it is knocked down for use as a table comprise a mechanical transmission set between said disabling means and said backrest.

Once again in the case of said first embodiment, said disabling means are configured for disabling completely longitudinal adjustment of the seat in their activated condition.

In an alternative embodiment, said disabling means are configured in such a way that, in their activated condition, longitudinal adjustment of the seat is still possible, but with the exclusion of a position of maximum longitudinal advance.

Once again in the case of said first embodiment, said means of adjustment of the longitudinal position of the seat comprise, in a way in itself known, at least one fixed guide, a mobile guide slidably mounted on the fixed guide, a device for withholding the mobile guide with respect to the fixed guide in a selected position, and a release member for deactivating said retention device. The aforesaid disabling means comprise a clamping element that is mobile between an activated position and a deactivated position and is designed to prevent, in its activated position, a movement of said release member.

Once again in the case of said first embodiment, the aforesaid mechanical transmission is constituted by a Bowden-cable transmission having one end associated to the backrest in such a way that rotation of the backrest from the upright position to the position where it is knocked down forwards causes application of a tensile force exerted on said Bowden cable.

In the aforesaid alternative embodiment, instead, the aforesaid means of longitudinal adjustment comprise an electrical actuator and said disabling means comprise a sensor device designed to detect when the backrest is not in its position where it is knocked down to form a table and consequently to disable operation of the aforesaid electrical actuator, at least to an extent whereby positioning of the seat in a position of maximum advance will be prevented.

Thanks to the characteristics described above, the seat according to the invention, when it is in its configuration to form a table, can be brought into a position of maximum advance for the purpose of creating a greater space for the occupants of the rear seats of the motor vehicle. At the same time, in the case where the backrest is in the upright position, reaching of the aforesaid position of maximum advance is prevented so as to prevent the occupant of the seat from being able to use the seat in a position that does not guarantee an adequate safety since it is too close to the dashboard of the motor vehicle and impairs the ergonomic comfort of the driver.

Further characteristics and advantages of the invention will emerge from the ensuing description with reference to the annexed plate of drawings, which are provided purely by way of non-limiting example and in which:
- Figure 1 is an exploded and partial perspective view of an embodiment of the seat according to the invention, in a first operating condition;
- Figure 2 is an exploded and partial perspective view of the seat of Figure 1, in a different operating condition;
- Figures 3 and 4 are cross-sectional views according to the lines III and IV of Figures 1 and 2; and
- Figures 5 and 6 present a schematic plan view of the passenger compartment of a motor vehicle provided with a seat according to the invention, in two different operating conditions.

With reference to the drawings, the number 1 designates, as a whole, a motor-vehicle seat, in particular a front passenger seat, comprising a base structure 2, which, in the example illustrated, includes a pair of lateral structures 2a, on which the cushion (not illustrated) of the seat 1 is carried. The reference number 3 designates the backrest of the seat 1 (illustrated with a dashed line) having, in a way in itself known, an padded body, mounted on a frame, which is in turn mounted articulated, once again in a way in itself known, about a horizontal transverse axis 4 on the lateral structures 2a.

In the present description and in the annexed plate of drawings, the constructional details regarding the structures 2a, the structure of the frame of the backrest 3, the structure of the frame of the seat cushion, and the articulated installation of the backrest about the horizontal transverse axis 4 are not illustrated since they can be made in any known way and since that details, taken in themselves, do not fall within the scope of the present invention. Their elimination from the drawings moreover renders the latter more readily and easily understandable.

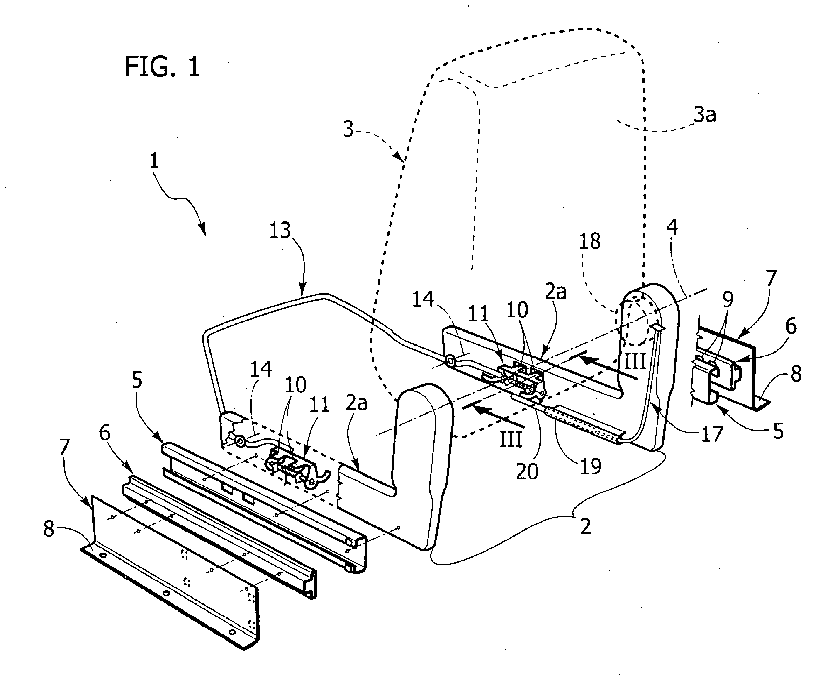

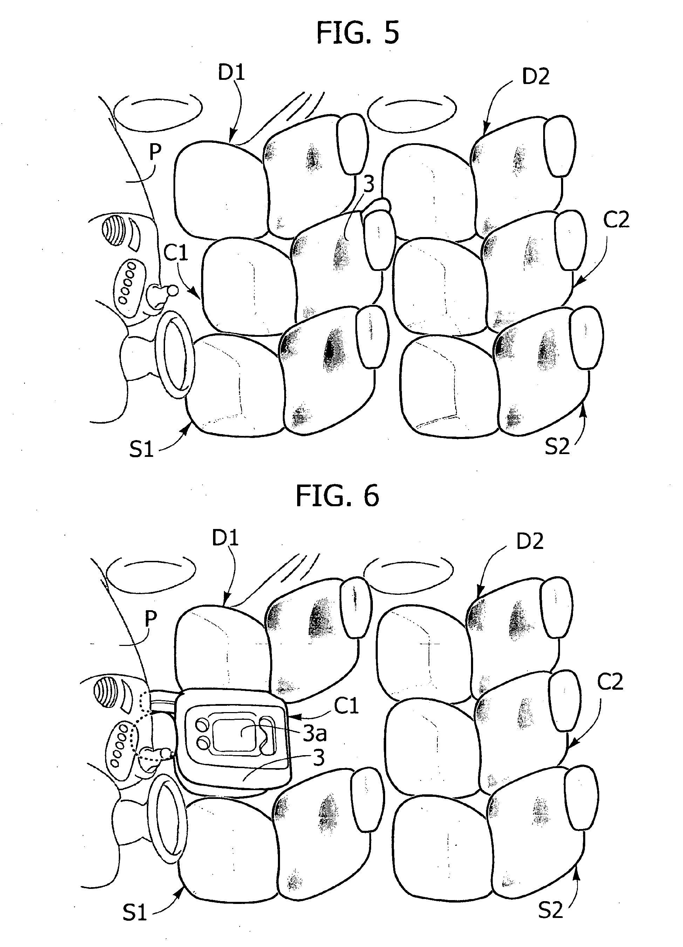

The backrest 3 is displaceable, once again in a way in itself known, between an upright position of normal use (illustrated in Figure 1) and a position where it is rotated forwards knocked down on top of the seat cushion, in which the rear surface 3a of the backrest constitutes a resting surface usable as a table (see also Figure 6). For this purpose, the backrest 3 is preferably provided on its rear surface with a rigid panel, for example made of plastic material, possibly defining a plurality of trays and compartments on the surface of the table. In a way similar to what has been said above with reference to the constructional details of the seat, also the constructional details of the rear panel of the backrest, as well as the clamping device of the backrest in the upright position or in the position where it is knocked down are not illustrated in so far as they can be obtained in any way in itself known. Once again according to the conventional technique, the user can act on a release lever (not illustrated) for releasing articulation of the backrest and displacing the latter between the upright position and the position where it is knocked down to form a table.

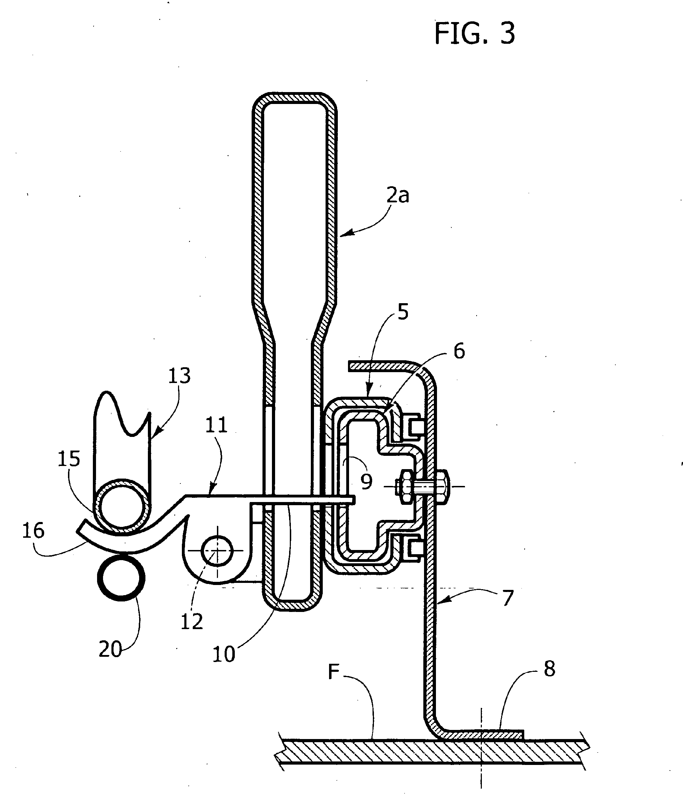

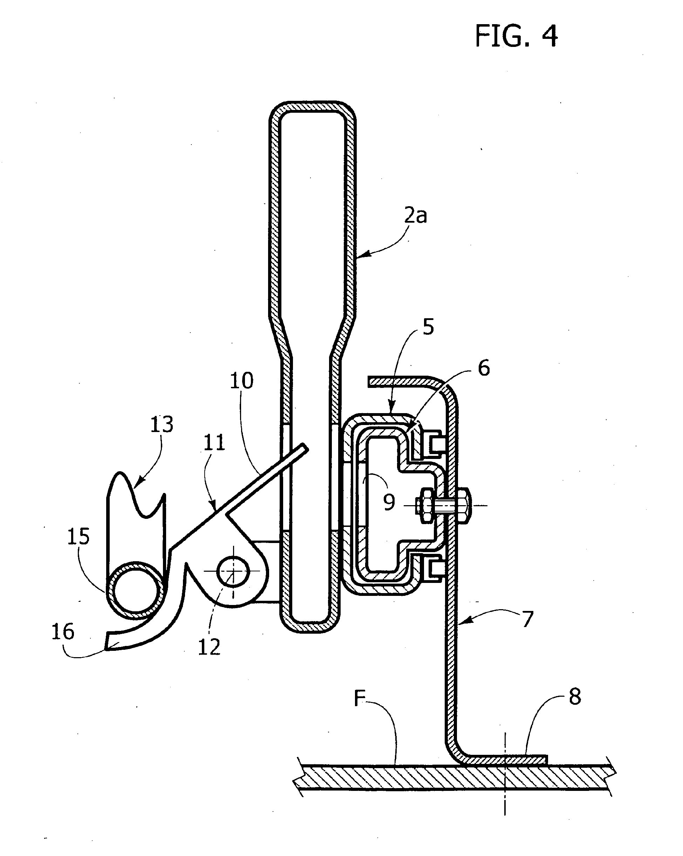

Once again according to a conventional technique, the base structure 2 of the seat is provided with means for adjustment of the longitudinal position of the seat along the floor panel of the motor vehicle. In the example illustrated, said means comprise a pair of mobile guides 5, fixed on the external side surfaces of the two lateral structures 2a and mounted slidably on two fixed guides 6, which are anchored to two vertical plates 7, equipped with horizontal flanges 8 for fixing on the floor panel of the motor vehicle (designated by F in Figures 3 and 4). In the example illustrated, as is may be seen, the mobile guides 5 and the fixed guides 6 are constituted by metal sectional elements with C-shaped and T-shaped cross section, respectively. Obviously, said details are illustrated herein purely by way of example, since any other configuration for the device for longitudinal adjustment of the seat may be adopted. For example, the guides could be mounted so as to have a plane of sliding set horizontally, instead of vertically, as in the figures.

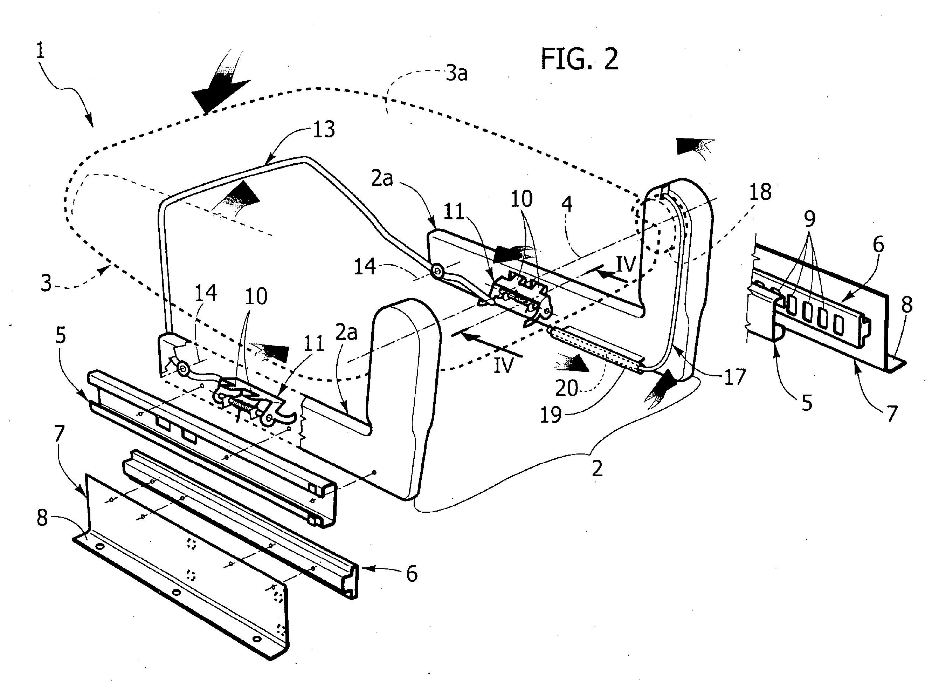

Once again according to the conventional technique, the seat is kept clamped in a selected longitudinal position in so far as the fixed guides 6 are each provided with an aligned series of slots 9, one of which is engaged by an arm 10 of a retention lever 11, mounted oscillating about an axis 12 on a support carried by the respective lateral structure 2a. Elastic means (not illustrated) tend to keep the arm 10 in the condition of clamping illustrated in Figure 3, in which said arm passes through an opening made in the respective mobile guide 5 and engages a slot 9 of the fixed guide 6 so as to keep the seat clamped in a selected longitudinal position. Once again according to the conventional technique, the user can shift upwards a cross-member forming part of a release member 13 (Figures 1 and 2) having a general U-shaped configuration, with side arms articulated about a common transverse axis 14 on the base structure of the seat and terminating with ends 15, designed each to engage an arm 16 of the aforesaid oscillating lever 11. When the cross-member 13 is shifted upwards, the ends 15 shift downwards, so causing movement of the two clamping levers 11 into the released condition, illustrated in Figure 4.

Once again, it is emphasized here that the description and illustration of the constructional details of the levers 11, of the corresponding release member 13, and of the parts of the guides engaged by them are illustrated in a purely schematic way and could vary widely with respect to what is presented purely by way of example herein.

According to the invention, associated to at least one of the two retention levers 11 is a mechanical flexible Bowden-cable transmission 17 that is associated to the backrest 3 of the seat. In particular, as may be seen in Figures 1 and 2, the Bowden cable 17 has an end partially wound around a body 18 carried by the backrest and rotating about the axis of articulation 4 of the backrest. The Bowden cable 17 is guided in a bushing 19 secured to the respective lateral structure 2a and has one end connected to a metal bar 20, which is also slidably mounted within the cylindrical bushing 19. A spring (not illustrated) is provided in the bushing 19 for recalling the bar 20 towards the extracted position illustrated in Figure 1.

When the backrest 3 is in its upright position (Figure 1), the bar 20 is located in its extracted position, in which it is kept by the corresponding return spring provided within the bushing 19. In said condition, the bar 20 sets itself underneath the arm 16 of the retention lever 11 (see Figure 3) so as to prevent any rotation of said lever 11 towards the released condition, i.e., so as to prevent a rotation in a counterclockwise direction (as viewed in Figure 3) of the lever 11 starting from the clamped condition, illustrated in Figure 3.

When the backrest 3 is knocked down into the configuration where it forms a table, its rotation causes application of a tensile force, via the Bowden cable 17, on the bar 20, which is forced to bring itself into its retracted condition within the guide bushing 19 against the action of the respective return spring. In said configuration, the bar 20, which previously functioned as member for disabling longitudinal adjustment of the seat, is deactivated so that the clamping levers 11 are free to move into the released condition when the user acts on the release member 13, then to proceed to an adjustment of the longitudinal position of the seat.

Consequently, in the seat according to the invention, when the backrest is in its upright position of normal use, the possibility of a longitudinal adjustment of the seat is precluded, whereas when the backrest is knocked down into the table configuration, the member for disabling longitudinal adjustment is deactivated so that the seat can be adjusted in position and in particular can be brought into a more advanced position that would not be normally usable when the seat is occupied by a person.

Figures 5 and 6 of the annexed plate of drawings show, by way of example in plan view, the passenger compartment of a motor vehicle equipped with a row of three front seats S1, C1, D1 and a row of three rear seats S2, C2, and D2. The central front seat C1 is made in conformance with the teachings of the present invention. Consequently, when it is not occupied by a person (Figure 6), its backrest can be knocked down into a configuration to form a table, and in said configuration it is possible to bring the seat itself into a position of maximum advance up against the dashboard P of the motor vehicle so as to generate a maximum space available for the occupant of the rear seat C2. Thanks to said possibility, the seat C2 may in turn be brought into a more advanced position so as to extend the space available in the loading compartment, in the case of a vehicle equipped with hatchback.

As may be seen, in the case of the example illustrated, longitudinal adjustment of the seat is totally inhibited when the backrest of the seat is not in its position where it is knocked down to form a table. However, it may likewise be envisaged that in said configuration of longitudinal adjustment of the seat it is still possible, but to a more limited extent and in particular without the possibility of reaching the position of maximum longitudinal advance that it is instead possible to reach when the backrest is knocked down in the configuration to form a table.

Furthermore, as already mentioned above, the means that disable the possibility of longitudinal adjustment and that are controlled by the rotation of the backrest can be of any type. For example, in the case of electrical adjustment of the longitudinal position of the seat, said disabling means can be constituted by a switch that disables the electrical actuator, at least to an extent whereby positioning of the seat in a position of maximum advance is prevented, i.e., when the backrest is not in the position where it is knocked down to form a table.

Of course, without prejudice to the principle of the invention, the details of construction and the embodiments may vary widely with respect to what is described and illustrated herein purely by way of example, without thereby departing from the scope of the present invention.

## Claims

1. A motor-vehicle seat, comprising:
- a base structure (2), provided with means (5, 6, 11, 13) adjusting the longitudinal position of the seat on the floor panel of the motor vehicle;
- a cushion carried by the base structure; and
- a backrest, supported in an articulated way by the base structure (2) and displaceable between an upright position of normal use and a position where it is rotated forwards on top of the cushion, in which the rear surface of the backrest (3) defines a resting surface usable as a table,
said seat being **characterized in that** it moreover comprises:
- means (20) disabling the aforesaid means of longitudinal adjustment (5, 6, 11, 13), displaceable between an activated condition and a deactivated condition; and
- means (17) activating said disabling means (20) when the backrest (3) is not in its position where it is knocked down for use as a table.

2. The seat according to Claim 1, **characterized in that** said means activating the disabling means when the backrest is not in its position where it is knocked down for use as a table comprise a mechanical transmission (17) set between said disabling means (20) and said backrest (3).

3. The seat according to Claim 1, **characterized in that** said disabling means (20) are configured for disabling completely longitudinal adjustment of the seat in their activated condition.

4. The seat according to Claim 1, **characterized in that** said disabling means are configured in such a way that, in their activated condition longitudinal, adjustment of the seat is still possible, but with exclusion of a position of maximum longitudinal advance.

5. The seat according to Claim 2, **characterized in that** said means of adjustment of the longitudinal position of the seat comprise at least one fixed guide (6), a mobile guide (5) slidably mounted on the fixed guide (6), a device (11) for withholding the mobile guide (5) with respect to the fixed guide (6) in a selected position, and a release member (13) for deactivating said retention device (11); and
**in that** the disabling means comprise a clamping member (20) that is mobile between an activated position and a deactivated position, and designed to prevent, in its activated position, a movement of said release member (13).

6. The seat according to Claim 2, **characterized in that** the aforesaid mechanical transmission is constituted by a Bowden-cable transmission (17) having one end associated to the backrest (3) in such a way that the rotation of the backrest from the upright position to the position where it is knocked down forwards causes the application of a tensile force on said Bowden cable (17).

7. The seat according to Claim 1, **characterized in that** the aforesaid means of longitudinal adjustment comprise an electrical actuator and **in that** said disabling means comprise a sensor device designed to detect when the backrest is not in its position where it is knocked down to form a table and consequently disable operation of the aforesaid electrical actuator, at least to an extent whereby positioning of the seat in a position of maximum advance is prevented.

## Patentansprüche

1. Kraftfahrzeugsitz, umfassend:
- eine Grundstruktur (2) mit Mitteln (5, 6, 11, 13) zum Einstellen der längsgerichteten Position des Sitzes auf der Grundplatte des Kraftfahrzeugs;
- ein Kissen, welches durch die Grundstruktur getragen wird; und
- eine Rückenlehne, die auf eine gelenkige Art durch die Grundstruktur (2) gestützt wird, und verstellbar ist zwischen einer aufrechten Position der normalen Verwendung und einer Position, in die sie vorwärts oben auf das Kissen gedreht wird, und in welcher die hintere Oberfläche der Rückenlehne (3) eine Rastoberfläche definiert, die als ein Tisch verwendet werden kann,
wobei der Sitz **dadurch gekennzeichnet ist, dass** er weiterhin umfasst:
- Mittel (20), welche die Mittel der längsgerichteten Verstellung (5, 6, 11, 13) sperren, und verstellbar zwischen einem aktivierten Zustand und einem deaktivierten Zustand sind; und
- Mittel (17), welche die sperrenden Mittel (20) aktivieren, wenn die Rückenlehne (3) nicht in ihrer Position ist, in der sie zur Verwendung als ein Tisch umgeklappt ist.

2. Sitz nach Anspruch 1, **dadurch gekennzeichnet, dass** die Mittel, welche die sperrenden Mittel aktivieren, wenn die Rückenlehne nicht in ihrer Position ist, in der sie zur Verwendung als ein Tisch umgeklappt ist, eine mechanische Übertragung (17) umfassen, die zwischen die sperrenden Mittel (20) und die Rückenlehne (3) gesetzt ist.

3. Sitz nach Anspruch 1, **dadurch gekennzeichnet, dass** die sperrenden Mittel (20) zum vollständigen Sperren einer Längsverstellung des Sitzes in ihrem aktivierten Zustand gestaltet sind.

4. Sitz nach Anspruch 1, **dadurch gekennzeichnet, dass** die sperrenden Mittel auf solch eine Art gestaltet sind, dass in ihrem aktivierten Zustand eine Längsverstellung des Sitzes immer noch möglich ist, jedoch unter Ausschluss einer Position mit maximalem längsgerichtetem Vorsprung.

5. Sitz nach Anspruch 2, **dadurch gekennzeichnet, dass** die Verstellmittel der längsgerichteten Position des Sitzes zumindest eine starre Führung (6) umfassen, eine mobile Führung (5), welche gleitbar auf der starren Führung (6) befestigt ist, eine Vorrichtung (11) zum Zurückhalten der mobilen Führung (5) in Bezug auf die starre Führung (6) in einer ausgewählten Position, und ein Freigabebauteil (13) zum Deaktivieren der Rückhaltevorrichtung (11); und
**dadurch**, dass die sperrenden Mittel ein Klemmbauteil (20) umfassen, welches zwischen einer aktivierten Position und einer deaktivierten Position beweglich ist, und gestaltet, um in seiner aktivierten Position eine Bewegung des Freigabebauteils (13) zu verhindern.

6. Sitz nach Anspruch 2, **dadurch gekennzeichnet, dass** die mechanische Übertragung durch eine Bowden-Kabel-Übertragung (17) gebildet wird, deren eines Ende mit der Rückenlehne (3) auf solch eine Art verbunden ist, dass die Drehung der Rückenlehne von der aufrechten Position in die Position, in der sie herabgeklappt ist, die Anwendung einer Zugkraft auf das Bowden-Kabel (17) auslöst.

7. Sitz nach Anspruch 1, **dadurch gekennzeichnet, dass** die Mittel zur Längsverstellung einen elektrischen Betätiger umfassen, und **dadurch**, dass die Sperrmittel eine Sensorvorrichtung umfassen, die gestaltet ist, um zu detektieren, wenn die Rückenlehne nicht in ihrer Position ist, in der sie herabgeklappt ist, um einen Tisch zu bilden, und folglich den Betrieb des elektrischen Betätigers sperren, zumindest in einem Ausmaß, in dem die Positionierung des Sitzes in einer Position mit maximalem Vorschub verhindert ist.

## Revendications

1. Un siège de véhicule automobile, comprenant :
- une structure de base (2), pourvue de moyens (5, 6, 11, 13) ajustant la position longitudinale du siège sur le panneau de plancher du véhicule automobile ;
- une assise portée par la structure de base ; et
- un dossier, supporté de manière articulée par la structure de base (2) et déplaçable entre une position redressée d'utilisation normale et une position où il est tourné vers l'avant par-dessus l'assise, où la surface arrière du dossier (3) définit une surface de repos utilisable comme table ;
ledit siège étant **caractérisé en ce qu'**il comprend en outre :
- des moyens désactivant les moyens précités d'ajustement longitudinal (5, 6, 11, 13), déplaçables entre un état activé et un état désactivé ; et
- des moyens (17) activant lesdits moyens de désactivation (20) lorsque le dossier (3) n'est pas dans sa position où il est rabattu pour être utilisé comme table.

2. Le siège selon la revendication 1, **caractérisé en ce que** lesdits moyens activant les moyens de désactivation lorsque le dossier n'est pas dans sa position où il est rabattu pour une utilisation comme table comprennent une transmission mécanique (17) disposée entre lesdits moyens de désactivation (20) et ledit dossier (3).

3. Le siège selon la revendication 1, **caractérisé en ce que** lesdits moyens de désactivation (20) sont configurés pour désactiver complètement l'ajustement longitudinal du siège dans leur état activé.

4. Le siège selon la revendication 1, **caractérisé en ce que** lesdits moyens de désactivation sont configurés de telle manière que dans leur état activé l'ajustement longitudinal du siège soit toujours possible, mais à l'exclusion d'une position d'avancée longitudinale maximum.

5. Le siège selon la revendication 2, **caractérisé en ce que** lesdits moyens d'ajustement de la position longitudinale du siège comprennent au moins un guide fixe (6), un guide mobile (5) monté à coulissement sur le guide fixe (6), un dispositif (11) pour retenir le guide mobile (5) par rapport au guide fixe (6) dans une position sélectionnée, et un organe de libération (13) pour désactiver ledit dispositif de retenue (11) ; et
**en ce que** les moyens de désactivation comprennent un organe de pincement (20) qui est mobile entre une position activée et une position désactivée, et conçu pour empêcher, dans sa position activée, un déplacement dudit organe de libération (13).

6. Le siège selon la revendication 2, **caractérisé en ce que** la transmission mécanique précitée est constituée par une transmission à câble Bowden (17) ayant une extrémité associée au dossier (3) de telle manière que la rotation du dossier de la position redressée à la position où il est rabattu vers l'avant provoque l'application d'une force de traction sur ledit câble Bowden (17).

7. Le siège selon la revendication 1, **caractérisé en ce que** les moyens précités d'ajustement longitudinal comprennent un actionneur électrique et **en ce que** lesdits moyens de désactivation comprennent un dispositif capteur conçu pour détecter le moment où le dossier n'est pas dans sa position où il est rabattu pour former une table et en conséquence désactiver le fonctionnement de l'actionneur électrique précité, au moins dans une mesure telle que le positionnement du siège dans une position d'avancée maximale soit empêché.
